# EUROPEAN PATENT APPLICATION

(11) **EP 4 621 626 A2**
(43) Date of publication of application: **24.09.2025**
(21) Application number: 25194721.4
(22) Date of filing: 07.08.2025
(51) Int. Cl.: G06F 21/62, G06F 21/85, H04L 9/40

(54) **INTEGRATED CIRCUIT AND DEVICE ACCESS ISOLATION METHOD, MEDIUM AND ELECTRONIC DEVICE THEREOF**

(30) Priority: 03.04.2025 CN 202510416962
(71) Applicant: XG TECH PTE. LTD., Singapore 179098 (SG)
(72) Inventor: FAN, Yihui, 179098 Singapore (SG)
(74) Representative: Dehns Germany Partnerschaft mbB

(57) **Abstract**

An integrated circuit and a device access isolation method, a medium, and an electronic device thereof are disclosed, and the method includes: determining fused identification information corresponding to a target application being run by a main controller; generating an access request carrying the fused identification information; determining preset identification information respectively stored in a plurality of isolation units corresponding to a plurality of slave devices; matching the preset identification information with the fused identification information; determining, based on a matching relationship between the preset identification information and the fused identification information, a target slave device to be isolated from the access request among the plurality of slave devices.

## Description

### FIELD OF THE PRESENT DISCLOSURE

The present disclosure relates to the field of integrated circuit technology, and more particularly, to an integrated circuit and a device access isolation method, a medium, and an electronic device thereof.

### BACKGROUND OF THE PRESENT DISCLOSURE

In the field of intelligent driving, a main controller in an intelligent driving chip may run applications with different functional security levels. When the main controller runs an application with a certain functional security level, the main controller may initiate an access request to a slave device in the intelligent driving chip. Since the initiated access requests all carry the same identification information when the main controller runs applications with different functional security levels, the identification information carried by the access request received by the firewall unit in the intelligent driving chip is always the same, resulting in that the firewall unit may not isolate applications with different functional security levels.

### SUMMARY OF THE PRESENT DISCLOSURE

In order to solve the above technical problems, the present disclosure provides an integrated circuit and a device access isolation method, a medium, and an electronic device thereof for securely isolating applications with different functional security levels.

In one aspect, there is provided a device access isolation method, including:
determining fused identification information corresponding to a target application being run by a main controller;
generating an access request carrying the fused identification information;
determining preset identification information respectively stored in a plurality of isolation units corresponding to a plurality of slave devices;
matching the preset identification information with the fused identification information; and
determining, based on a matching relationship between the preset identification information and the fused identification information, a target slave device to be isolated from the access request among the plurality of slave devices.
In another aspect, an integrated circuit is provided, including: a main controller, a plurality of slave devices, and a plurality of isolation units corresponding to the plurality of slave devices; wherein
the main controller is configured for determining fused identification information corresponding to a target application being run by the main controller;
the main controller is further configured for generating an access request carrying the fused identification information;
each of the plurality of isolation units is configured for determining preset identification information respectively stored, and matching the preset identification information with the fused identification information; and
each of the isolation units is further configured for determining, based on a matching relationship between the preset identification information and the fused identification information, a target slave device to be isolated from the access request among the plurality of slave devices.
In yet another aspect, an embodiment is directed to a computer program product which, when executed by an instruction processor, causes the processor to implement a device access isolation method according to an embodiment of the first aspect of the present disclosure.

In yet another aspect, an embodiment is directed to an electronic device, the electronic device including: a processor; a memory for storing the processor-executable instructions; wherein the processor is configured for reading the executable instructions from the memory and executing the instructions to implement the device access isolation method of the first aspect described above; or, the electronic device includes the integrated circuit of the second aspect described above.

In the device access isolation method according to the embodiments of the present disclosure, when a main controller runs a target application, since fused identification information corresponding to the target application may be determined, and an access request carrying the fused identification information may be generated, the fused identification information may be matched with preset identification information stored in a plurality of isolation units corresponding to a plurality of slave devices, and a target slave device among the plurality of slave devices which needs to be isolated from the access request is determined based on a matching relationship between the fused identification information and the fused identification information. Namely, the technical solution of the present disclosure may determine different fused identification information based on running applications with different functional security levels; therefore, after initiating access requests carrying the fused identification information to a plurality of slave devices, an isolation unit corresponding to a slave device may match the received dynamically changing fused identification information with preset identification information, so as to determine a target slave device which needs to be isolated from the access request, that is to say, a target slave device corresponding to an application with a different functional security level may be determined from a plurality of slave devices, thereby ensuring that applications with different functional security levels are isolated from access to the corresponding target slave device.

### BRIEF DESCRIPTION OF THE DRAWINGS

FIG. 1A is a structure schematic diagram of an integrated circuit according to an exemplary embodiment of the present disclosure.
FIG. 1B is a structure schematic diagram of an integrated circuit according to another exemplary embodiment of the present disclosure.
FIG. 2 is a flow diagram of a device access isolation method according to an exemplary embodiment of the present disclosure.
FIG. 3 is a flow diagram of a device access isolation method according to another exemplary embodiment of the present disclosure.
FIG. 4 is a flow diagram of a device access isolation method according to another exemplary embodiment of the present disclosure.
FIG. 5 is a flow diagram of a device access isolation method according to yet another exemplary embodiment of the present disclosure.
FIG. 6 is a flow diagram of a device access isolation method according to a further another exemplary embodiment of the present disclosure.
FIG. 7 is a structure diagram of an electronic device according to an exemplary embodiment of the present disclosure.

### DESCRIPTION OF THE EMBODIMENTS

In order to explain the present disclosure, exemplary embodiments of the present disclosure will be described in detail below with reference to the accompanying drawings. It is apparent that the described embodiments are only a part of the embodiments of the present disclosure, not all of them, and it is understood that the present disclosure is not limited to the exemplary embodiments.

It should be noted that the relative arrangement, numerical expressions, and values of the components and steps described in these embodiments do not limit the scope of the present disclosure unless specified otherwise.

### SUMMARY OF APPLICATION

In the technical field of intelligent driving, there will be applications with different functional security levels on the intelligent driving chip, and the applications with different functional security levels may run on the same main controller of the intelligent driving chip. When a main controller runs an application, an access request carrying the identifier of the main controller may be generated, and a corresponding slave device is accessed via the access request; and for the consideration of functional security, an access isolation need to be performed on applications with different functional security levels for different slave devices.

In the traditional method, on a main controller side, a memory region is divided by a memory protection unit (MPU) to obtain a plurality of isolation regions, so as to realize the isolation of an address space; however, since the number of isolation regions is limited and there are a large number of slave devices to be isolated, the number of isolation regions and the number of slave devices cannot be aligned, so that precise isolation of slave devices cannot be achieved. In addition, since the access requests received on the slave device side all carry the same identifier, it is impossible to isolate applications with different functional security levels.

Based on the above-mentioned technical problem, In the device access isolation method provided in the embodiments of the present disclosure, when a main controller runs a target application, since fused identification information corresponding to the target application may be determined, and an access request carrying the fused identification information may be generated, the fused identification information may be matched with preset identification information stored in a plurality of isolation units corresponding to a plurality of slave devices, and a target slave device among the plurality of slave devices which needs to be isolated from the access request is determined based on a matching relationship between the fused identification information and the fused identification information. Namely, according to the technical solution of the present disclosure, different fused identification information may be determined based on running applications with different functional security levels; therefore, after initiating an access request carrying the fused identification information to a plurality of slave devices, an isolation unit corresponding to a slave device may match the received dynamically changing fused identification information with preset identification information, so as to determine a target slave device which needs to be isolated from the access request, that is to say, with regard to applications with different functional security levels, a target slave device corresponding to an application with a corresponding functional security level may be determined from the plurality of slave devices. Thus, the access isolation between the applications with different functional security levels and the corresponding target slave devices may be realized, thereby performing the refined access control for the applications with different functional security levels.

### Exemplary system

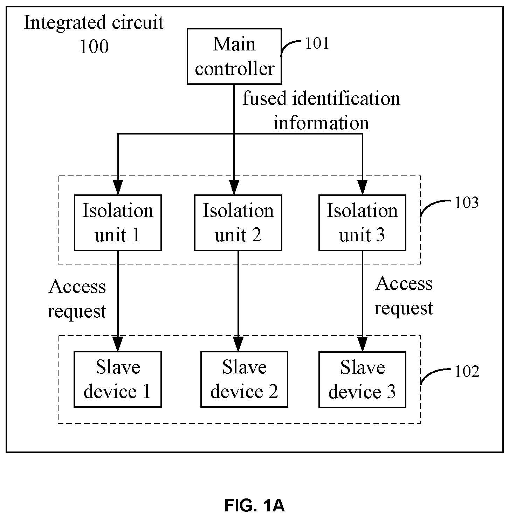

FIG. 1A is a structure schematic diagram of an integrated circuit according to an exemplary embodiment of the present disclosure.

Illustratively, as shown in FIG. 1A, the integrated circuit 100 described above may include: a main controller 101, a plurality of slave devices 102, and a plurality of isolation units 103 corresponding to the plurality of slave devices.

The main controller 101 is configured for determining fused identification information corresponding to a target application being run by the main controller.

The main controller 101 is further configured for generating an access request carrying the fused identification information.

Illustratively, as shown in FIG. 1A, each of the plurality of isolation units 103 is configured for determining preset identification information respectively stored, and matching the preset identification information with the fused identification information; wherein the plurality of isolation units 103 includes an isolation unit 1, an isolation unit 2 and an isolation unit 3.

Illustratively, as shown in FIG. 1A, each isolation unit is further configured for determining a target slave device among a plurality of slave devices 102 to be isolated from an access request based on a matching relationship between preset identification information and fused identification information; the plurality of slave devices 102 includes a slave device 1 corresponding to the isolation unit 1, a slave device 2 corresponding to the isolation unit 2, and a slave device 3 corresponding to the isolation unit 3.

In embodiments of the present disclosure, the integrated circuit 100 described above may be a system on chip (SOC). The integrated circuit is, for example, an intelligent driving chip.

In some examples, FIG. 1A described above is merely illustrative, and integrated circuit 100 may also include other main controllers, slave devices, and isolation units corresponding to the other slave devices, and the embodiments of the present disclosure are not limited thereto. Each of the above-mentioned isolation units may be a hardware firewall or other hardware structure with an isolation function.

In some embodiments, as shown in FIG. 1A, a main controller 101 may be configured specifically for determining multiple pieces of identification information corresponding to a target application based on operating parameters corresponding to the target application; and fusing multiple pieces of identification information corresponding to the target application and the identification information of the main controller to obtain the fused identification information.

Illustratively, the main controller 101 is further configured for determining an address space identifier based on the target address space corresponding to a target application; determining a virtual machine identifier based on an operating system corresponding to the target application; determining a permission identifier based on an access permission corresponding to a target application; determining a security identifier based on an access secure type corresponding to a target application; wherein the multiple pieces of identification information include an address space identifier, a virtual machine identifier, a permission identifier and a security identifier.

In some embodiments, as shown in FIG. 1A, the plurality of isolation units 103 may be configured for determining the target slave device based on the slave device to which the target preset identification information corresponds, in response to the target preset identification information not matching the fused identification information corresponding to the target application.

In some embodiments, after a target slave device is determined, a target isolation unit corresponding to the target slave device isolates an access request of a target application for the target slave device; other isolation units of the plurality of isolation units, other than the target isolation unit, allow access requests to be transmitted to their respective corresponding slave devices.

For example, as shown in FIG. 1A, it is assumed that the isolation unit 1 stores the preset identification information 1, the isolation unit 2 stores the preset identification information 2, and the isolation unit 3 stores the preset identification information 3. After the main controller 101 generates an access request carrying the fused identification information for the target application, if the preset identification information 1 and the preset identification information 3 both match the fused identification information, and the preset identification information 2 does not match the fused identification information, the slave device 2 corresponding to the preset identification information 2 is determined to be the target slave device, so that the access request of the target application for the slave device 2 may be isolated by the isolation unit 2, that is to say, the access request is prohibited from being transmitted to the slave device 2, and the isolation unit 1 and the isolation unit 3 allow the access request to be transmitted to the respective corresponding slave device 1 and slave device 3.

In some embodiments, as shown in FIG. 1A, a plurality of isolation units 103 may be further configured for verifying the fused identification information to obtain verification result information, and matching the preset identification information with the fused identification information based on the verification result information.

Illustratively, the plurality of isolation units may be configured for matching the preset identification information with the fused identification information in response to the verification result information indicating that the fused identification information passes the verification.

Through the above-mentioned scheme, since the verification of the fused identification information is added, it is ensured that errors will not occurs in the fused identification information during the transmission process, and the reliability of the fused identification information is enhanced, so that an accurate target slave device may be determined based on the more reliable fused identification information matching with the preset identification information, thereby improving the accuracy of access isolation for secure applications with different functions.

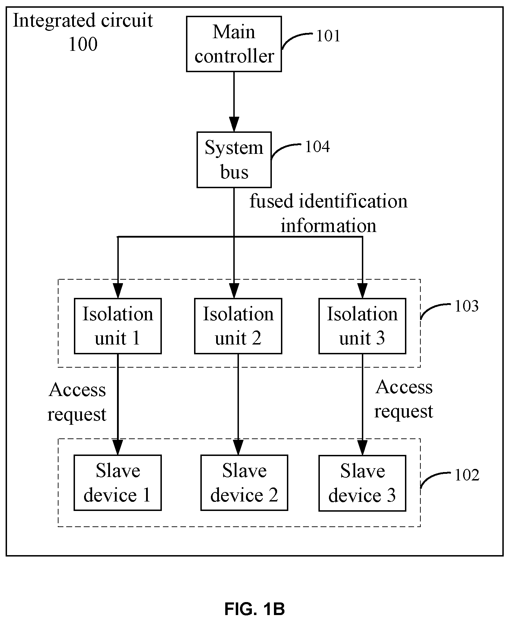

In other examples, as shown in FIG. 1B, the integrated circuit 100 may further include: the system bus 104, through which the main controller 101 and the plurality of isolation units 102 are connected to each other. In this manner, access requests generated by the main controller 101 carrying the fused identification information may be transmitted to the various isolation units via the system bus 104.

An embodiment of the present disclosure provides a device access isolation method for an integrated circuit. When a main controller runs a target application, since fused identification information corresponding to the target application may be determined based on operating parameters of the target application, and an access request carrying the fused identification information may be generated, the fused identification information may be matched with preset identification information stored in a plurality of isolation units corresponding to a plurality of slave devices, and a target slave device among the plurality of slave devices which needs to be isolated from the access request is determined based on a matching relationship between the fused identification information and the fused identification information. Namely, according to the technical solution of the present disclosure, different fused identification information may be determined based on running applications with different functional security levels; therefore, after initiating an access request carrying the fused identification information to a plurality of slave devices, an isolation unit corresponding to a slave device may match the received dynamically changing fused identification information with preset identification information, so as to determine a target slave device which needs to be isolated from the access request, that is to say, with regard to applications with different functional security levels, a target slave device corresponding to an application with a corresponding functional security level may be determined from the plurality of slave devices. Thus, the access isolation between the applications with different functional security levels and the corresponding target slave devices may be realized, thereby performing the refined access control for the applications with different functional security levels.

Moreover, according to the solution of the present disclosure, when the intelligent driving chip switches to run applications with different functional security levels, it only requires switching of corresponding bit information in the fused identification information so as to enable switching of different operating systems and different access permissions, etc. thereby not only reducing the consumption in the switching process, but also greatly improving the running speed and flexibility. In addition, when the same slave device may be accessed by applications with different functional security levels, the same slave device may be multiplexed between different functional security levels by dynamically changing fused identification information, so that the hardware cost of the chip is saved.

### Exemplary method

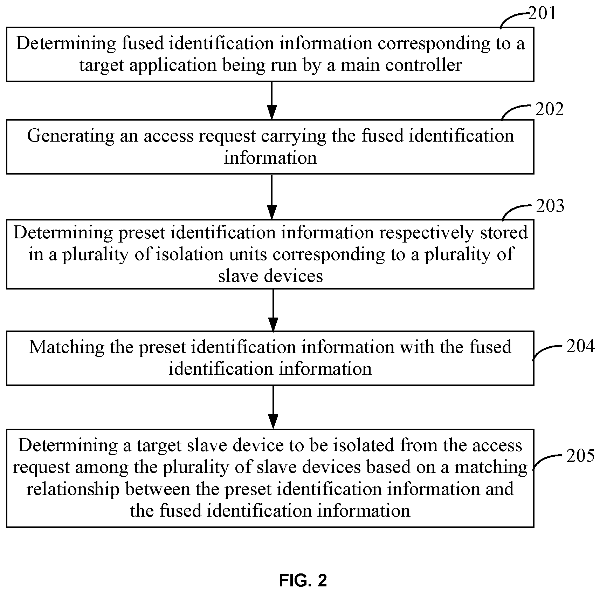

FIG. 2 is a flow diagram of a device access isolation method according to an exemplary embodiment of the present disclosure. The embodiment may be applied on an integrated circuit as shown in FIG. 1A or FIG. 1B, or on an electronic device including an integrated circuit as shown in FIG. 1A or FIG. 1B. As shown in FIG. 2, the method includes the following steps.

Step 201, determining fused identification information corresponding to a target application being run by a main controller.

In some embodiments, the main controller may be a processor in a system on chip (SOC), for example, the main controller is a central processor on an intelligent driving chip. The main controller may also be another type of processor, and the embodiments of the present disclosure are not limited thereto.

In some embodiments, the fused identification information described above is information used to isolate applications of different functional security levels. Since different applications correspond to different functional security levels, different applications correspond to different fused identification information, so that different fused identification information may be obtained when the main controller switches to run different applications.

Illustratively, different applications may be divided into four levels of functional security in terms of the International Organization for Standardization-defined automotive safety integrity level (ASIL) and risk associated with hazards: ASIL-A, ASIL-B, ASIL-C and ASIL-D and Quality Management (QM). Among them, the functional security level specified by ASIL-D is the highest, and the functional security levels specified by ASIL-C, ASIL-B and ASIL-B as well as QM are successively lower. For example, the functional security level corresponding to the automatic driving perception system is ASIL-D, and the functional security level corresponding to the car music player is ASIL-A.

In some examples, the above-mentioned fused preset information may be a character string of a preset length, and the character string may include at least one of the following: letter, number or symbol, etc. The length of the character string may be fixed or non-fixed, and the embodiments of the present disclosure are not limited thereto, and may be specifically determined according to actual use conditions.

Illustratively, the target application may be a navigation application, an autopilot application, or the like, and the embodiments of the present disclosure are not limited thereto.

Step 202, generating an access request carrying the fused identification information.

In some embodiments, an access request may be generated by executing a particular instruction and transmitted over a system bus.

Step 203, determining preset identification information respectively stored in a plurality of isolation units corresponding to a plurality of slave devices.

In some embodiments, each isolation unit may store one or more preset identification information. And with regard to any one slave device, if the slave device allows only one application to access, an isolation unit corresponding to the slave device stores one piece of preset identification information, or if the slave device allows multiple applications to access, an isolation unit corresponding to the slave device stores multiple pieces of preset identification information.

In some embodiments, the preset identification information stored by respective isolation units may be the same or different. If the applications allowed to be accessed by respective slave devices are different, the isolation units corresponding to respective slave devices store different preset identification information. Alternatively, if the applications allowed to be accessed by respective slave devices are the same application, the isolation units corresponding to respective slave devices may store the same preset identification information. In particular, it may be determined according to actual use, and the embodiments of the present disclosure are not limited thereto.

In some examples, the isolation units may be a hardware circuit unit having an isolation function.

In some examples, the above-mentioned preset identification information may be a character string of a preset length, and the character string may include at least one of the following: letter, number or symbol, etc. The length of the character string may be fixed or non-fixed, and the embodiments of the present disclosure are not limited thereto, and may be specifically determined according to actual use conditions.

In some embodiments, the above-mentioned preset identification information is the identification information corresponding to the access request allowed by the isolation unit to be transmitted to the corresponding slave device. Firstly, determining applications with different functional security levels which are allowed to be accessed by respective slave devices, then generating corresponding fused identification information based on operating parameters of the applications with different functional security levels, and pre-storing the fused identification information in a storage unit in an isolation unit corresponding to respective slave devices, namely, preset identification information. In this manner, the preset identification information may be read from the storage units of the respective isolation units.

Step 204, matching the preset identification information with the fused identification information.

In some embodiments, an appropriate matching algorithm may be determined first, and then the preset identification information and the fused identification information may be matched based on the selected matching algorithm.

In some examples, the preset identification information and the fused identification information are both character strings, and when the preset identification information and the fused identification information are matched, the lengths of the two character strings, namely, the preset identification information and the fused identification information, may be matched first, and based on the length matching result, each bit of the two character strings continues to be compared; if the lengths of the two character strings of the preset identification information and the fused identification information are the same, then continuing to compare each bit of the two character strings so as to obtain a matching relationship between the preset identification information and the fused identification information, or if the lengths of the two character strings of the preset identification information and the fused identification information are different, then it is not necessary to continue to compare each bit of the two character strings.

In the case where the lengths of the two character strings of the preset identification information and the fused identification information are the same, if the two elements of the corresponding bit in the two character strings are all the same, it means that the preset identification information matches with the fused identification information; otherwise, if the two elements of any one corresponding bit in the two character strings are different, it means that the preset identification information does not match with the fused identification information.

Since each isolation unit stores the preset identification information, it is necessary to match the fused identification information with the preset identification information stored in each isolation unit on a one-to-one basis.

Step 205, determining, based on a matching relationship between the preset identification information and the fused identification information, a target slave device to be isolated from the access request among the plurality of slave devices.

In some examples, the matching relationship between the preset identification information and the fused identification information includes two types: (1) The preset identification information matches with the fused identification information; (2) The preset identification information does not match the fused identification information.

In some examples, the plurality of slave devices described above may be various devices and sensors coupled to the main controller for collecting various data or for executing instructions of the main controller to perform certain functions. For example, the plurality of slave devices may include at least one of: a microphone, a camera, a laser radar, a loudspeaker, etc.

In some embodiments, if the preset identification information stored in at least one isolation unit does not match the fused identification information, it indicates that there is a target slave device for which the access request is not allowed to proceed, and the access request needs to be isolated from the target slave device; therefore, a target slave device which needs to be isolated from the access request among a plurality of slave devices may be determined, so that an isolation unit corresponding to the target slave device isolates the access request so as to prohibit the access request from being transmitted to the target slave device; and on the contrary, if the preset identification information stored in each isolation unit matches the fused identification information. It means that there is no target slave device for which the access request is not allowed to proceed, and the access request does not need to be isolated from respective slave devices, so that respective isolation units do not need to perform an isolation operation on the access request, so that respective isolation units may allow the access request to be transmitted to respective slave devices.

Illustratively, as shown in FIG. 1A, an integrated circuit includes an isolation unit 1, an isolation unit 2 and an isolation unit 3, a slave device 1 corresponding to the isolation unit 1, a slave device 2 corresponding to the isolation unit 2, and a slave device 3 corresponding to the isolation unit 3; the isolation unit 1 stores the preset identification information 1, the isolation unit 2 stores the preset identification information 2, and the isolation unit 3 stores the preset identification information 3.

In one possible example, after the main controller generates an access request carrying the fused identification information, when matching the fused identification information with the preset identification information 1, the preset identification information 2 and the preset identification information 3, respectively, since the preset identification information 2 is not matched the fused identification information, the slave device 2 may be determined as a target slave device, and thus the isolation unit 2 isolates the access request from the slave device 2, i. e. the access request cannot be transmitted to the slave device 2.

In another possible example, after the main controller generates an access request carrying the fused identification information, when matching the fused identification information with the preset identification information 1, the preset identification information 2 and the preset identification information 3, respectively, since the fused identification information is matched with all of the preset identification information 1, the preset identification information 2 and the preset identification information 3, there is no target slave device for which the access request is not allowed to proceed, and thus respective isolation units allow the access request to be transmitted to corresponding slave device.

In the device access isolation method provided in the embodiments of the present disclosure, when a main controller runs a target application, since fused identification information corresponding to the target application may be determined, and an access request carrying the fused identification information may be generated, the fused identification information may be matched with preset identification information stored in a plurality of isolation units corresponding to a plurality of slave devices, and a target slave device among the plurality of slave devices which needs to be isolated from the access request is determined based on a matching relationship between the fused identification information and the fused identification information. Namely, the technical solution of the present disclosure may determine different fused identification information based on running applications with different functional security levels; therefore, after initiating an access request carrying the fused identification information to a plurality of slave devices, an isolation unit corresponding to respective slave devices may match the received dynamically changing fused identification information with preset identification information, so as to determine a target slave device which needs to be isolated from the access request, that is to say, with regard to applications with different functional security levels, a target slave device corresponding to an application with a corresponding functional security level may be determined from the plurality of slave devices. Thus, the access isolation between the applications with different functional security levels and the corresponding target slave devices may be realized, thereby performing the refined access control for the applications with different functional security levels.

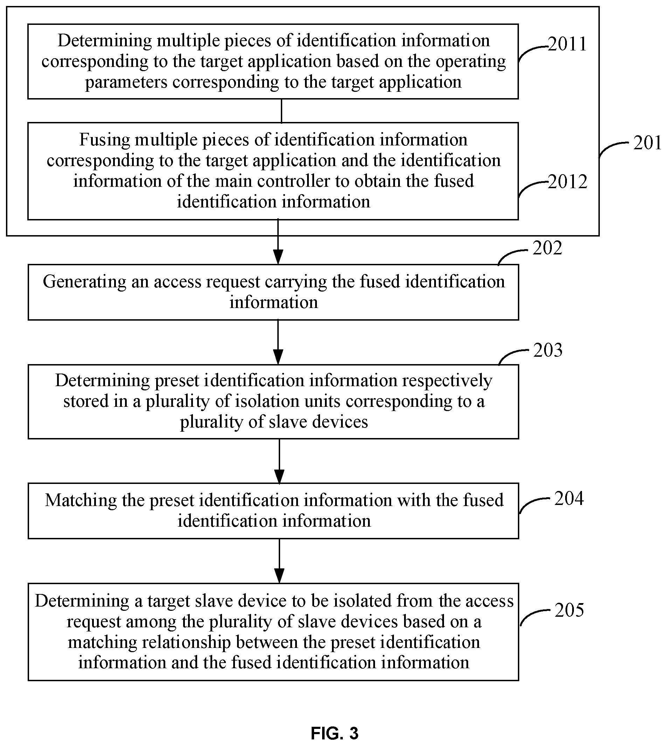

As shown in FIG. 3, on the basis of the embodiment shown in FIG. 2 described above, step 201 may include the following steps:

Step 2011, determining, based on the operating parameters corresponding to the target application, multiple pieces of identification information corresponding to the target application.

In some examples, the operating parameters may include at least one running parameter, each running parameter corresponding to a different identification information, such that multiple pieces of identification information corresponding to the at least one running parameter may be obtained based on the at least one running parameter.

Illustratively, the operating parameters may include: a target address space corresponding to the target application, an operating system corresponding to the target application, an access permission corresponding to the target application and an access secure type corresponding to the target application. The above-mentioned multiple pieces of identification information may include: an address space identifier, a virtual machine identifier, a permission identifier and a security identifier.

In some embodiments, applications of different functional security levels correspond to different operating parameters, and therefore different pieces of identification information may be determined for applications of different functional security levels.

In some embodiments, the above-mentioned step 2011, may specifically include the following steps: determining an address space identifier based on the target address space corresponding to a target application; determining a virtual machine identifier based on an operating system corresponding to the target application; determining a permission identifier based on an access permission corresponding to a target application; determining a security identifier based on an access secure type corresponding to a target application; wherein the multiple pieces of identification information include: an address space identifier, a virtual machine identifier, a permission identifier and a security identifier.

In some examples, different address spaces may be respectively configured for each application in advance based on service requirements and functional security levels of different applications; when the main controller runs the target application, a target address space corresponding to the target application may be determined, and the target application is run in the target address space.

In some embodiments, the address space identifier is an identifier for uniquely identifying an address space, such that different address spaces correspond to different address space identifiers, such that the different address spaces may be distinguished by the address space identifier.

In some examples, after respective applications are configured with a different address space, a unique address space identifier may be generated for each address space, namely, the address space corresponds to the address space identifier on a one-to-one basis; when the main controller runs the target application, an address space identifier corresponding to the target address space may be determined based on the target address space corresponding to the target application.

Illustratively, the address space identifier may be randomly generated or derived based on a starting address of a target address space. The address space identifier may be represented in binary form, or other possible forms, and the embodiments of the present disclosure are not limited thereto. For example, the address space identifier is a binary character string corresponding to the starting address of the target address space.

Since applications with different security levels of functions correspond to different address spaces, when switching to run different applications, the switching of address spaces is realized, so that applications with different security levels of functions may be isolated.

In some examples, in the technical field of automobiles, with regard to the scenario of a hybrid operating system, a plurality of virtual machines may be created in advance, each of which is independent, and different operating systems run on different virtual machines; therefore, a one-to-one binding relationship between an operating system and a virtual machine is realized, and thus isolation between different operating systems is realized. The operating system may include a Linux Operating System (Linux) operating system, a Microsoft Windows operating system, a Quick UNIX (QNX) operating system, or other types of operating systems, which are not limited by the embodiments of the present disclosure, and are determined based on actual usage.

In some examples, in order to ensure isolation between applications of different functional security levels, different virtual machines may be allocated in advance for applications of different functional security levels, and since different operating systems are run on different virtual machines, applications of different functional security levels may run under different operating systems, thus achieving isolation between applications of different functional security levels. When the main controller runs the target application, the operating system corresponding to the target application may be determined based on the functional security level of the target application.

In some examples, the above-mentioned virtual machine identifier (Virtual Machine ID, VMID) is an identifier for uniquely identifying a virtual machine, and thus different virtual machine identifiers correspond to different virtual machines, so that the different virtual machines may be distinguished by the virtual machine identifier. Since a virtual machine corresponds to an operating system running thereby on a one-to-one basis, it may also be considered that a virtual machine identifier may be configured for distinguishing different operating systems, and thus a virtual machine corresponding to an operating system may be determined on the basis of the operating system corresponding to a target application, and the virtual machine identifier of the virtual machine may be acquired.

Illustratively, in the case where there are a plurality of virtual machines, since the virtual machine identifier is an identifier for uniquely identifying the virtual machine, a different virtual machine identifier may be set for each virtual machine in advance; the virtual machine identifier may be randomly generated or custom configured for the user. The virtual machine identifier may be represented in hexadecimal form or other possible forms, and the embodiments of the present disclosure are not limited thereto. For example, the virtual machine identifier is a character string of numbers and letters.

In some embodiments, multiple access permissions may be included in a system-on-a-chip, such as Exception level (EL) in a certain chip architecture, each access permission being different. In order to ensure the isolation between the applications with different functional security levels, different access permissions may be configured for the applications with different functional security levels based on the functional security levels in advance, and therefore the access permissions of the applications with different functional security levels to the data are different. When the target application is running, the access permission corresponding to the target application may be determined based on the functional security level of the target application. For different applications, the corresponding access permissions thereof may be different or the same, and the embodiments of the present disclosure are not limited thereto, and are specifically determined according to actual use conditions.

In some examples, the above-mentioned permission identifier may be used to uniquely identify an access permission; with regard to a plurality of access permissions, configuring different permission identifiers for each access permission; with regard to applications with different functional security levels, since they correspond to different access permissions, the determined permission identifiers are also different.

In some examples, the permission identifier may be a character string. For example, a character string consists of letters and numbers.

Illustratively, it is assumed that the access permissions may include a first access permission, a second access permission, a third access permission, and a fourth access permission; here, the first access permission is denoted by EL0, the second access permission is denoted by EL1, the third access permission is denoted by EL2, and the fourth access permission is denoted by EL3. When a target application is running, based on a functional security level of the target application, an access permission corresponding to the target application is determined to be a first access permission, and therefore a permission identifier EL0 of the first access permission may be acquired.

In some embodiments, the access secure types include a secure type (s) and an non-secure type (ns). A corresponding access secure type may be configured for applications of different functional security levels based on the functional security level in advance; when the target application is running, the access secure type corresponding to the target application may be determined based on the functional security level of the target application. For different applications, the corresponding access secure types may be different or may be the same, and the embodiments of the present disclosure are not limited thereto, and are specifically determined according to actual use conditions.

For example, the functional security level of the first application is ASIL D, and the access secure type corresponding to the first application is a secure type; the functional security level of the second application is ASIL B, and the access secure type corresponding to the second application is a secure type.

For another example, the functional security level of the first application is ASIL D, and the access secure type corresponding to the first application is a secure type; the functional security level of the third application is ASIL C, and the access secure type corresponding to the second application is a non-secure type.

In some examples, the above-mentioned security identification may be used to uniquely identify an access secure type; for different access secure types, different security identifiers may be configured for each access secure type in advance; for different applications, if different applications correspond to different access secure types, different security identifiers may be determined, or if different applications correspond to the same access secure types, the same security identifiers may be determined.

In some examples, the security identifier may be a character string. For example, a character string consists of only numbers.

Illustratively, the security identifier may be represented by a 0 or a 1. When the access secure type is a secure type, the security identifier is 0, and when the access secure type is a non-secure type, the security identifier is 1; alternatively, when the access secure type is a secure type, the security identifier is 1, and when the access secure type is a non-secure type, the security identifier is 0.

Step 2012, fusing multiple pieces of identification information corresponding to the target application and the identification information of the main controller to obtain the fused identification information.

In some embodiments, the identification information of the main controller is an identifier for uniquely identifying the main controller, the identification information of the same main controller is the same, and different main controllers correspond to different identification information. The identification information of the main controller may be a serial number of the main controller, and the serial number of the main controller may be a serial number written by a chip manufacturer when the chip is shipped from the factory, or a customized serial number written by a user through a security protocol.

In some examples, the identification information of the main controller is obtained by accessing a specific register in the main controller.

In some embodiments, multiple pieces of identification information may be fused with the identification information of the main controller according to a preset fused strategy to obtain fused identification information.

Illustratively, multiple pieces of identification information is directly spliced with the identification information of the main controller to form a new character string, which is the fused identification information.

In the device access isolation method according to the embodiments of the present disclosure, since corresponding multiple pieces of identification information may be determined based on respective operating parameters corresponding to a target application, the fused identification information is obtained by fusing the multiple pieces of identification information and the identification information of the main controller, so that when switching and operating applications with different functional security levels, switching of different operating systems and different access permissions may be achieved only by switching corresponding bit information in the fused identification information, thereby not only reducing the consumption in the switching process, but also greatly improving the operating speed and flexibility.

In addition, when the same slave device may be accessed by applications with different functional security levels, the same slave device may be multiplexed between different functional security levels by dynamically changing fused identification information, so that the hardware cost of the chip is saved.

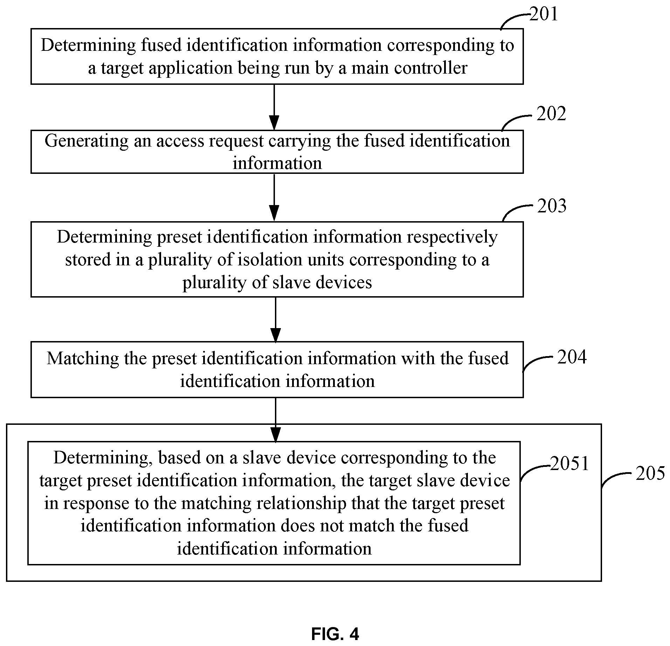

As shown in FIG. 4, based on the embodiment shown in FIG. 2 described above, step 205 may include the following steps:

Step 2051, determining, based on a slave device corresponding to the target preset identification information, the target slave device in response to the matching relationship that the target preset identification information does not match the fused identification information.

In some embodiments, the target preset identification information and the fused identification information are character strings, and therefore corresponding bits in the target preset identification information and the fused identification information may be compared one-to-one, and when a character of a certain bit in the target preset identification information is different from a character of a corresponding bit in the fused identification information, it may be determined that the target preset identification information does not match the fused identification information. The target preset identification information may be preset identification information stored in any one of the isolation units.

In some embodiments, when the target preset identification information does not match the fused identification information, the slave device to which the target preset identification information corresponds may be determined, and the slave device to which the target preset identification information corresponds may be determined as the target slave device.

In some examples, the number of target preset identification information may be one or more. When the number of the target preset identification information is one, the target slave device is only a slave device corresponding to only one target preset identification information; or, when the number of the target preset identification information is multiple, if multiple target preset identification information all correspond to the same slave device, the target slave device is the one slave device, or if multiple target preset identification information respectively correspond to at least two slave devices, the target slave device is the at least two slave devices.

Illustratively, it is assumed that the integrated circuit includes an isolation unit 1, an isolation unit 2, and an isolation unit 3, a slave device 1 corresponding to the isolation unit 1, a slave device 2 corresponding to the isolation unit 2, and a slave device 3 corresponding to the isolation unit 3; the isolation unit 1 stores the preset identification information 1, the isolation unit 2 stores the preset identification information 2, and the isolation unit 3 stores the preset identification information 3. When the preset identification information 2 does not match the fused identification information, since the preset identification information 2 corresponds to the slave device 2, the slave device 2 may be determined as a target slave device.

In some embodiments, after a target slave device is determined, an isolation unit corresponding to the target slave device isolates an access request from the target slave device, namely, prohibiting the access request from being transmitted to the target slave device, so that the target slave device cannot be accessed via the access request; a slave device other than the target slave device among the plurality of slave devices may be accessed by the access request.

In other embodiments, each of the plurality of slave devices may be individually accessed by the access request in response to a matching relationship between the preset identification information and the fused identification information stored for all the isolation units indicating that none of the plurality of slave devices needs to be isolated from the access request.

By the device access isolation method provided in the embodiments of the present disclosure, a target slave device may be determined based on a slave device corresponding to the target preset identification information when the target preset identification information does not match with the fused identification information, and therefore an access request cannot access the target slave device, so that applications with different functional security levels correspond to different fused identification information via applications with different functional security levels so as to achieve access isolation for applications with different functional security levels.

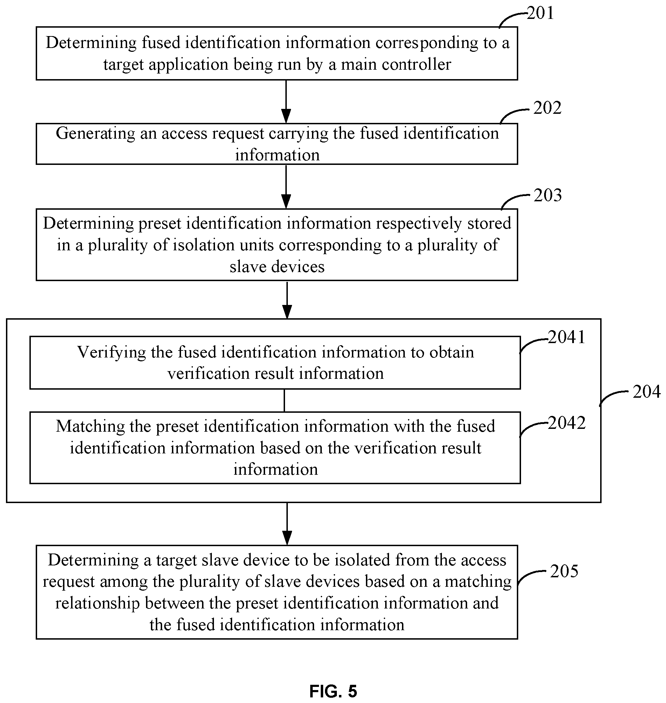

As shown in FIG. 5, based on the embodiment shown in FIG. 2 described above, step 204 may include the following steps:

Step 2041, verifying the fused identification information to obtain verification result information.

In some examples, the verification manner may include any of the following: a parity verification, a cyclic redundancy verification or an arithmetic accumulation verification, etc. Of course, other possible verification methods may also be used to verify the fused identification information, and the embodiments of the present disclosure do not limit the verification method of the fused identification information, and may be specifically determined according to actual use conditions.

Illustratively, an odd verification in the parity verification is exemplified. Assuming that the fused identification information is 1011, when the fused identification information is verified in an odd verification mode, firstly the number of "1" in the fused identification information is counted: three. Since the odd verification mode is used, and the number of "1" in the fused identification information is odd (three), a verification bit is required to make the number of "1" in the whole data still be odd, so as to set the verification bit to be 0 so as to keep the number of "1" unchanged as odd, and the verification bit and 1011 are combined to obtain an odd verification code of "10110"; when receiving the odd verification code at the receiving end, if the odd verification code is "10110", the total number of "1" in the odd verification code is calculated to be 3, which means that the verification is passed since the total number of "1" is odd, or if the odd verification code is "10111", the total number of "1" in the odd verification code is calculated to be 4, which means that the verification is failed since the total number of "1" is even.

In some examples, the verification result information may include two cases: (1) the verification result information indicates that the fused identification information passes the verification; (2) the verification result information indicates that the fused identification information fails to be verified.

In some examples, the verification result information may be represented by an identifier, with different identifiers corresponding to different verification result information. For example, the identifier "1" may be used to indicate that the verification result information passes the verification for the fused identification information, and the identifier "0" may be used to indicate that the verification result information fails the verification for the fused identification information.

Illustratively, when the fused identification information is verified, if the fused identification information passes the verification, the verification result information "1" may be obtained, or if the fused identification information fails the verification, the verification result information "0" may be obtained.

Step 2042, matching the preset identification information with the fused identification information based on the verification result information.

In some embodiments, the above-mentioned step 2042, may specifically include: matching the preset identification information with the fused identification information in response to the verification result information indicating that the fused identification information passes the verification.

When the verification result information indicates that the fused identification information passes the verification, it shows that the fused identification information is not in error during the transmission process, that is to say, the fused identification information is correct, and therefore preset identification information and the fused identification information may be matched; on the contrary, when the verification result information indicates that the fused identification information fails to be verified, it indicates that the fused identification information is erroneous during the transmission process, that is to say, the fused identification information is erroneous, and thus no operation needs to be performed.

Illustratively, when the verification result information is "1", it is indicated that the fused identification information passes the verification, and the preset identification information may be matched with the fused identification information at this time, or when the verification result information is "0", it is indicated that the fused identification information fails the verification, and no operation needs to be performed at this time.

Matching the preset identification information with the fused identification information may refer to the detailed description of the above-mentioned embodiments, and the description of the embodiments of the present disclosure will not be repeated here.

By the device access isolation method according to an embodiment of the present disclosure, verification result information is obtained by verifying fused identification information, the preset identification information is matched with the fused identification information based on the verification result information, and the preset identification information is matched with the fused identification information in response to the verification result information indicating that the fused identification information is verified. Since the verification of the fused identification information is added, it is ensured that errors will not occur in the fused identification information generate during the transmission process, thereby enhancing the reliability of the fused identification information. And an accurate target slave device may be determined based on the more reliable fused identification information matching with the preset identification information, thereby improving the accuracy of access isolation for secure applications with different functions.

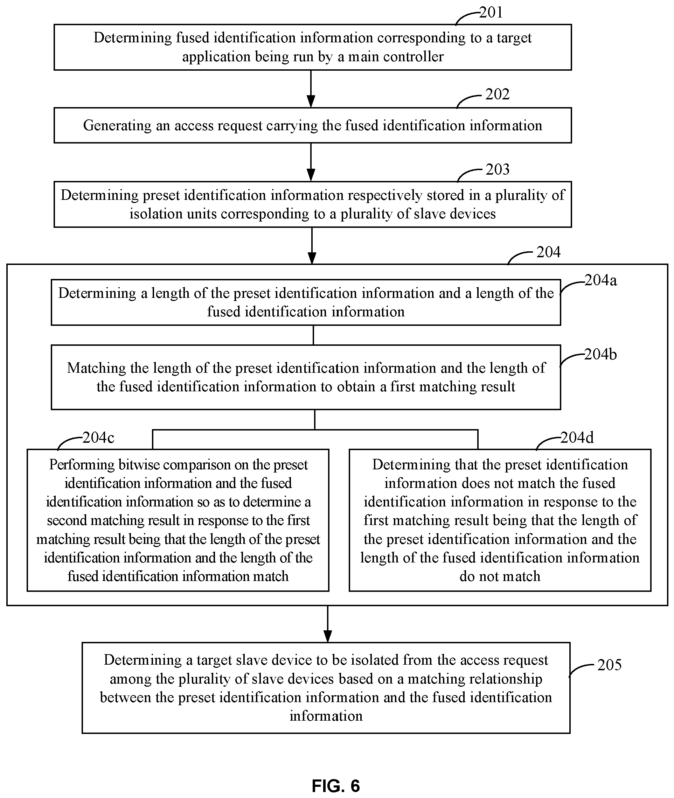

As shown in FIG. 6, on the basis of the embodiment shown in FIG. 2 described above, step 204 may include the following steps:

Step 204a, determining a length of the preset identification information and a length of the fused identification information.

In some examples, since the preset identification information and the fused identification information are character strings, the length of the preset identification information and the length of the fused identification information may be respectively obtained based on a character string length function, or the length of the preset identification information and the length of the fused identification information may be determined by traversing the character strings of the preset identification information and the fused identification information and respectively counting characters in the character strings. The length of the preset identification information and the length of the fused identification information may also be acquired in other manners, and the embodiments of the present disclosure are not limited thereto.

Step 204b, matching the length of the preset identification information and the length of the fused identification information to obtain a first matching result.

In some embodiments, after the length of the preset identification information and the length of the fused identification information are determined, the length of the preset identification information and the length of the fused identification information are compared; if the length of the preset identification information is equal to the length of the fused identification information, the length of the preset identification information matches the length of the fused identification information, namely, the first matching result is that the length of the preset identification information matches the length of the fused identification information; or if the length of the preset identification information is not equal to the length of the fused identification information, the length of the preset identification information does not match the length of the fused identification information, namely, the first matching result is that the length of the preset identification information does not match the length of the fused identification information.

Step 204c, performing bitwise comparison on the preset identification information and the fused identification information so as to determine a second matching result in response to the first matching result being that the length of the preset identification information and the length of the fused identification information match.

In some embodiments, when the length of the preset identification information matches the length of the fused identification information, elements of all corresponding bits in the preset identification information and the fused identification information are compared; if the elements of all the corresponding bits in the preset identification information and the fused identification information are the same, the second matching result is that the preset identification information and the fused identification information match, or if the elements of any one of the corresponding bits in the preset identification information and the fused identification information are not the same, the second matching result is that the preset identification information and the fused identification information do not match.

Step 204d, determining that the preset identification information does not match the fused identification information in response to the first matching result being that the length of the preset identification information and the length of the fused identification information do not match.

When the length of the preset identification information does not match the length of the fused identification information, it may be determined that the preset identification information does not match the fused identification information, and there is no need to compare elements in the preset identification information and the fused identification information.

In the device access isolation method provided in the embodiments of the present disclosure, since a first matching result may be obtained by matching the determined length of the preset identification information and the length of the fused identification information, on the one hand, when the first matching result is that the length of the preset identification information and the length of the fused identification information do not match, the mismatch between the preset identification information and the fused identification information may be directly determined, so that the case of length mismatch is quickly excluded, and unnecessary element comparison is avoided, thereby improving the matching efficiency; on the other hand, when the first matching result is that the length of the preset identification information matches the length of the fused identification information, by performing a bitwise comparison on the preset identification information and the fused identification information, it may be accurately judged whether the two identification information are consistent, thereby ensuring the accuracy of the matching result.

### Exemplary electronic device

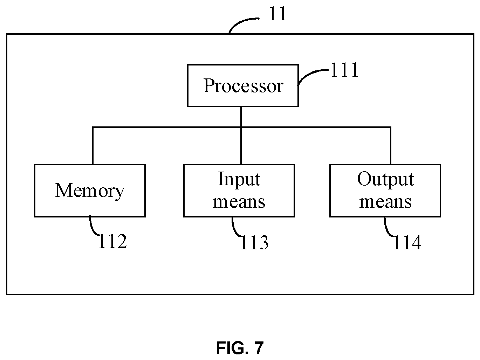

FIG. 7 is a structure diagram of an electronic device including at least one processor 111 and memory 112 provided according to an embodiment of the present disclosure.

The processor 111 may be a central processing unit (CPU) or other form of processing unit having data processing capabilities and/or instruction performing capabilities, and may control other components in the electronic device 11 to perform desired functions.

The memory 112 may include one or more computer program products, which may include various forms of computer-readable storage medium, such as volatile memory and/or non-volatile memory. Volatile memory may include, for example, random access memory (RAM) and/or cache, etc. The non-volatile memory may include, for example, a read-only memory (ROM), a hard disk, a flash memory, etc. One or more computer program instructions may be stored on the computer-readable storage medium, and the processor 111 may run one or more computer program instructions to implement the device access isolation method and/or other desired functions of the various embodiments of the present disclosure hereinabove.

In one example, the electronic device 11 may further include: the input means 113 and the output means 114, these components are interconnected by a bus system and/or other form of connection mechanism (not shown).

The input means 113 may include various types of sensors including, but not limited to: a distance measuring sensor for detecting a distance between a target object and a vehicle; an image sensor for acquiring information about the surroundings of the vehicle. In some examples, the input means may also include a pressure sensor for detecting seat pressure, determining whether a passenger is present, and the location of the passenger; a temperature sensor for monitoring a temperature within the cockpit; a humidity sensor configured for monitoring the humidity in the cockpit to assist in regulating the vehicle interior environment; air quality sensors for monitoring in-vehicle air quality, such as carbon dioxide, volatile organic compounds (VOC), and the like; a light sensor for detecting the light intensity inside and outside the vehicle; an acceleration sensor for detecting a change in acceleration of the vehicle; a distance sensor for detecting a distance between the vehicle and another object; a touch screen sensor for interaction with a vehicle infotainment system; biometric sensors, such as fingerprint recognition, face recognition, etc.; a heart rate monitor for monitoring a heart rate of a driver; a sound sensor for voice recognition and interaction, and realizing a voice control function; seat sensors for monitoring the use condition of the seat, such as whether the seat is occupied, and the size of the occupant; wireless communication sensors, such as Bluetooth, Wi-Fi, etc. are used to connect with intelligent devices to realize data transmission and remote control. In addition to the examples given above, the input means may also include more or fewer sensors, which will not be described in more detail here.

The output means 114 may output various information or signals to other hardware or devices, which may include a display, a car stereo, a seat, a window, a steering wheel, etc. as well as a communication network and remote output devices connected thereto, etc. The display may include a plurality of different display screens, such as a main driving display screen, a slave driving display screen, a rear display screen, and the car stereo may include a plurality of loudspeakers arranged at different positions in a vehicle cockpit with different display screens or loudspeakers operating independently.

Of course, for simplicity, only some of the components of the electronic device 11 relevant to the present disclosure are shown in FIG. 7, omitting components such as buses, input/output interfaces, and the like. In addition, the electronic device 11 may include any other suitable components, depending on the particular application.

Of course, for simplicity, only some of the components of the electronic device 11 relevant to the present disclosure are shown in FIG. 7, omitting components such as buses, input/output interfaces, and the like. In addition, the electronic device 11 may include any other suitable components, depending on the particular application.

### Exemplary computer program product and computer-readable storage medium

In addition to the methods and device described above, according to the embodiments of the present disclosure, there may also be provided a computer program product, including computer program instructions which, when executed by a processor, cause the processor to perform the steps in the device access isolation methods of the various embodiments of the present disclosure described in the "Exemplary method" section above.

The computer program product may include program code for performing operations of embodiments of the present disclosure written in any combination of one or more programming languages, including object-oriented programming languages, such as Java, C++, etc. and conventional procedural programming languages, such as the "C" language or similar programming languages. The program code may perform entirely on the user computing device, partially on the user device, as a stand-alone software package, partially on the user computing device, partially on a remote computing device, or entirely on the remote computing device or server.

Further, according to embodiments of the present disclosure, there may also be provided a computer-readable storage medium having stored thereon computer program instructions which, when run by a processor, cause the processor to perform the steps in the device access isolation methods of the various embodiments of the present disclosure described in the "Exemplary method" section above.

The computer-readable storage medium may take any combination of one or more of the readable media. The readable medium may be a readable signal medium or a readable storage medium. A readable storage medium is exemplified by, but not limited to, a system, apparatus, or device including an electronic, magnetic, optical, electromagnetic, infrared, or semiconductor device, or a combination according to any of the foregoing. More specific examples (a non-exhaustive list) of the readable storage medium include: an electrical connection having one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

While the general principles of the present disclosure have been described above in combination with specific embodiments, the advantages, benefits, effects, and the like set forth in the present disclosure are merely exemplary and not limiting, and are not to be construed as necessarily required by the various embodiments of the present disclosure. Further, the specific details disclosed above are only for the purpose of illustration and ease of understanding, and not for limitation. The above details do not limit the necessity of using the specific details mentioned above to implement the present disclosure.

It will be apparent to those skilled in the art that various modifications and variations may be made in the present disclosure without departing from the spirit or scope of the present disclosures. Thus, if such modifications and variations of the present disclosure fall within the scope of the claims of the present disclosure and their equivalents, the present disclosure is also intended to include such modifications and variations.

## Claims

1. A device access isolation method, **characterized by** comprising:
determining (201) fused identification information corresponding to a target application being run by a main controller;
generating (202) an access request carrying the fused identification information;
determining (203) preset identification information respectively stored in a plurality of isolation units corresponding to a plurality of slave devices;
matching (204) the preset identification information with the fused identification information; and
determining (205), based on a matching relationship between the preset identification information and the fused identification information, a target slave device to be isolated from the access request among the plurality of slave devices.

2. The method according to claim 1, wherein the determining (201) fused identification information corresponding to a target application being run by a main controller comprises:
determining (2011), based on operating parameters corresponding to the target application, multiple pieces of identification information corresponding to the target application;
fusing (2012) the multiple pieces of identification information corresponding to the target application and the identification information of the main controller to obtain the fused identification information.

3. The method according to claim 2, wherein the determining (2011), based on operating parameters corresponding to the target application, multiple pieces of identification information corresponding to the target application comprises:
determining an address space identifier based on a target address space corresponding to the target application;
determining a virtual machine identifier based on an operating system corresponding to the target application;
determining a permission identifier based on an access permission corresponding to the target application;
determining a security identifier based on an access secure type corresponding to the target application;
wherein the multiple pieces of identification information comprise the address space identifier, the virtual machine identifier, the permission identifier, and the security identifier.

4. The method according to any one of claims 1 to 3, wherein the determining (205), based on a matching relationship between the preset identification information and the fused identification information, a target slave device to be isolated from the access request among the plurality of slave devices comprises:
determining (2051), based on a slave device corresponding to the target preset identification information, the target slave device in response to the matching relationship that the target preset identification information does not match the fused identification information.

5. The method according to any one of claims 1 to 4, wherein the matching (204) the preset identification information with the fused identification information comprises:
verifying (2041) the fused identification information to obtain verification result information; and
matching (2042) the preset identification information with the fused identification information based on the verification result information.

6. The method according to claim 5, wherein the matching (2042) the preset identification information with the fused identification information based on the verification result information comprises:
matching the preset identification information with the fused identification information in response to the verification result information indicating that the fused identification information passes the verification.

7. The method according to any one of claims 1 to 6, wherein the matching (204) the preset identification information with the fused identification information comprises:
determining (204a) a length of the preset identification information and a length of the fused identification information;
matching (204b) the length of the preset identification information and the length of the fused identification information to obtain a first matching result;
performing (204c) bitwise comparison on the preset identification information and the fused identification information so as to determine a second matching result in response to the first matching result being that the length of the preset identification information and the length of the fused identification information match; or,
determining (204d) that the preset identification information does not match the fused identification information in response to the first matching result being that the length of the preset identification information and the length of the fused identification information do not match.

8. An integrated circuit (100), **characterized by** comprising: a main controller (101), a plurality of slave devices (102), and a plurality of isolation units (103) corresponding to the plurality of slave devices (102); wherein
the main controller (101) is configured for determining fused identification information corresponding to a target application being run by the main controller;
the main controller (101) is further configured for generating an access request carrying the fused identification information;
each of the plurality of isolation units (103) is configured for determining preset identification information stored therein, and matching the preset identification information with the fused identification information; and
each of the isolation units (103) is further configured for determining, based on a matching relationship between the preset identification information and the fused identification information, a target slave device to be isolated from the access request among the plurality of slave devices.

9. The integrated circuit according to claim 8, wherein the main controller (101) is further configured for:
determining, based on operating parameters corresponding to the target application, multiple pieces of identification information corresponding to the target application;
fusing the multiple pieces of identification information corresponding to the target application and the identification information of the main controller to obtain the fused identification information.

10. The integrated circuit according to claim 9, wherein the main controller (101) is further configured for:
determining an address space identifier based on a target address space corresponding to the target application;
determining a virtual machine identifier based on an operating system corresponding to the target application;
determining a permission identifier based on an access permission corresponding to the target application;
determining a security identifier based on an access secure type corresponding to the target application;
wherein the multiple pieces of identification information comprise the address space identifier, the virtual machine identifier, the permission identifier, and the security identifier.

11. The integrated circuit according to any one of claims 8 to 10, wherein each of the plurality of isolation units (103) is further configured for:
determining, based on a slave device corresponding to the target preset identification information, the target slave device in response to the matching relationship that the target preset identification information does not match the fused identification information.

12. The integrated circuit according to any one of claims 8 to 11, wherein each of the plurality of isolation units (103) is further configured for:
verifying the fused identification information to obtain verification result information; and
matching the preset identification information with the fused identification information based on the verification result information.

13. The integrated circuit according to claim 12, wherein each of the plurality of isolation units (103) is further configured for:
matching the preset identification information with the fused identification information in response to the verification result information indicating that the fused identification information passes the verification.

14. A computer-readable storage medium, **characterized by** storing a computer program thereon, which, when executed by a processor (111), causes the processor (111) to implement the device access isolation method according to any one of claims 1 to 7.

15. An electronic device (11), **characterized by** comprising:
a processor (111);
a memory (112) for storing the processor-executable instructions;
wherein the processor (111) is configured for reading the executable instructions from the memory (112) and executing the instructions to implement the device access isolation method according to any one of claims 1 to 7;
or, the electronic device (11) comprises the integrated circuit according to claim 8.
